(19)

Europäisches
Patentamt
European
Patent Office
Office européen
des brevets

(11) **EP 4 644 673 A1**

(12) **EUROPEAN PATENT APPLICATION**
published in accordance with Art. 153(4) EPC

(43) Date of publication:
**05.11.2025 Bulletin 2025/45**

(21) Application number: **23909083.0**

(22) Date of filing: **30.06.2023**

(51) International Patent Classification (IPC):
**F01N 5/02** (2006.01)      **F02N 19/02** (2010.01)

(52) Cooperative Patent Classification (CPC):
**F01D 15/10; F01K 27/00; F01N 5/02; F01N 5/04;
F02B 9/08; F02B 37/00; F02B 39/00; F02B 77/00;
F02F 1/18; F02N 19/02; F02P 3/04; F02P 19/02;
Y02T 10/12**

(86) International application number:
**PCT/CN2023/104862**

(87) International publication number:
**WO 2024/139139 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022  CN 202211731086**

(71) Applicant: **BYD Company Limited
Shenzhen, Guangdong 518118 (CN)**

(72) Inventors:
• **PAN, Shiyi**
  **Shenzhen, Guangdong 518118 (CN)**
• **LI, Guanting**
  **Shenzhen, Guangdong 518118 (CN)**
• **LIU, Jing**
  **Shenzhen, Guangdong 518118 (CN)**

(74) Representative: **Mathys & Squire
The Shard
32 London Bridge Street
London SE1 9SG (GB)**

(54)    **ENGINE, ENGINE CONTROL METHOD, AND VEHICLE**

(57)    An engine, an engine control method, and a vehicle, related to the technical field of engines. The engine comprises an engine block, a fuel injection system, and a piston; a cylinder is formed in the engine block, the piston is slidably arranged in the cylinder, a combustion chamber is formed between the piston and the inner wall of the cylinder, and the fuel injection system is connected to the combustion chamber and is used for injecting fuel into the combustion chamber; in a single engine operating cycle, the total energy generated by the combustion of the fuel in the combustion chamber is Q1, the exhaust heat of the combustion chamber is Q2, and the outward heat dissipation heat of the combustion chamber is Q3; wherein $35\% \leq Q2:Q1 \leq 45\%$; and $Q3:Q1 \leq 20\%$.

FIG. 1

## Description

### CROSS-REFERENCE TO RELATED APPLICATIONS

The present disclosure claims priority to Chinese Patent Application No. 202211731086.6, filed on December 30, 2022 and entitled "ENGINE, METHOD FOR CONTROLLING ENGINE, AND VEHICLE". The entire content of the above-referenced application is incorporated herein by reference.

### FIELD

The present disclosure relates to the technical field of engines, and more specifically, to an engine, a method for controlling an engine, and a vehicle.

### BACKGROUND

An engine usually includes an engine body, an intake system, and an exhaust system. The intake system and the exhaust system are usually connected to an exhaust utilization apparatus. The existing engine exhaust system has a low temperature. Therefore, the exhaust utilization apparatus obtains limited energy, and utilizes limited energy, and thus cannot provide services to the engine or other components more effectively.

Therefore, a new technical solution is required to resolve the foregoing problem.

### SUMMARY

The present disclosure is intended to provide an engine, a method for controlling an engine, and a vehicle.

According to a first aspect of the present disclosure, an engine is provided. The engine includes an engine body, a fuel injection system, and a piston. A cylinder is formed in the engine body. The piston is slidably arranged in the cylinder. A combustion chamber is formed between the piston and an inner wall of the cylinder. The fuel injection system is connected to the combustion chamber and configured to inject fuel into the combustion chamber. In an operating cycle of the engine, total energy generated from the combustion of the fuel in the combustion chamber is Q1, exhaust heat of the combustion chamber is Q2, and heat emitted outward from the combustion chamber is Q3. $35\% \leq Q2{:}Q1 \leq 45\%$, and $Q3{:}Q1 \leq 20\%$.

Optionally, an exhaust system and an exhaust utilization apparatus are further included. The exhaust system is in communication with inside of the combustion chamber. The exhaust utilization apparatus is connected to an exhaust pipe.

Optionally, the exhaust utilization apparatus includes a turbocharging module. The turbocharging module includes a turbine, a rotating shaft, and a compressor wheel. The turbine and the compressor wheel are both drivingly connected to the rotating shaft. The turbine is located in the exhaust system. The compressor wheel is located in an intake system.

Optionally, the exhaust utilization apparatus includes a generator. A rotor of the generator is drivingly connected to the turbine.

Optionally, the exhaust utilization apparatus includes an exhaust gas recirculation module. The exhaust gas recirculation module includes a gas return branch pipe and an exhaust gas cooler. The exhaust gas cooler is arranged on the gas return branch pipe. One end of the gas return branch pipe is connected to the exhaust system. Another end of the gas return branch pipe is connected to the intake system of the engine.

Optionally, the exhaust utilization apparatus includes a Rankine circulation module. The Rankine circulation module includes a circulation pipeline, a heat exchanger, an expander, a condenser, and a pump body. The heat exchanger, the expander, the condenser, and the pump body are connected end to end through the circulation pipeline. The heat exchanger has a first heat exchange channel and a second heat exchange channel. The first heat exchange channel is in communication with the exhaust system. The second heat exchange channel is in communication with the circulation pipeline.

Optionally, the exhaust utilization apparatus includes at least one of a thermoelectric power generation module, a refrigeration and air conditioning module, and a waste heat heating module.

Optionally, a heat preservation apparatus is further included. The heat preservation apparatus is arranged in the engine body. The heat preservation apparatus is configured to retain heat within the combustion chamber.

Optionally, the heat preservation apparatus includes a heat preservation structure. A thermal insulation chamber is formed in the heat preservation structure. The heat preservation structure is arranged on an outer side of the cylinder and around the cylinder.

Optionally, the heat preservation apparatus includes a thermal insulation coating. The thermal insulation coating is arranged on the inner wall of the cylinder, or arranged on the outer side of the cylinder and around the cylinder, or arranged on an end of the piston.

Optionally, the thermal insulation coating is made of a silicon dioxide reinforced porous anodic alumina.

Optionally, the engine body includes a cylinder liner. The cylinder liner is arranged in the cylinder. An outer wall of the cylinder liner is attached to the inner wall of the cylinder. The piston is located in the cylinder liner.

Optionally, a heat preservation apparatus is further included. The heat preservation apparatus is arranged in the engine body. The heat preservation apparatus is configured to retain heat within the combustion chamber. The heat preservation apparatus includes a thermal insulation coating. The thermal insulation coating is arranged between the inner wall of the cylinder and the cylinder liner, or the thermal insulation coating is arranged on an inner wall of the cylinder liner.

Optionally, a heating apparatus is further included. The heating apparatus includes an electric heating unit. The electric heating unit is arranged between the inner wall of the cylinder and the outer wall of the cylinder liner.

Optionally, the fuel injection system is configured to inject the fuel into the combustion chamber after a temperature in the combustion chamber reaches a set threshold, to cause the fuel to be heated and auto-ignite in the combustion chamber; and the temperature in the combustion chamber reaches an auto-ignition temperature of the fuel during a compression stroke when the temperature in the combustion chamber is greater than or equal to the set threshold.

Optionally, a heating apparatus is further included. The heating apparatus is configured to heat the combustion chamber, to cause the temperature in the combustion chamber to reach the set threshold.

Optionally, the heating apparatus further includes a spark plug and/or an electric heating unit. The spark plug is configured to ignite the fuel to heat the combustion chamber through heat of the fuel.

The electric heating unit is configured to electrically heat the combustion chamber.

Optionally, an excess air coefficient of the engine is greater than or equal to 1.

According to a second aspect of the present disclosure, the foregoing method for controlling an engine is provided. The control method includes the following steps.

A temperature value characterizing a temperature in the combustion chamber is obtained.

The fuel injection system is controlled to inject fuel into the combustion chamber when the engine is in a compression stroke based on the preset rule. The fuel in the combustion chamber is heated and auto-ignites. An input parameter of the preset rule includes the temperature value.

According to a third aspect of the present disclosure, the foregoing method for controlling an engine is provided. The engine has a first operating state and a second operating state. The control method includes the following steps.

The temperature in the combustion chamber of the engine is increased to a set threshold during the first operating state. The temperature in the combustion chamber reaches an auto-ignition temperature of the fuel during the compression stroke when the temperature in the combustion chamber is greater than or equal to the set threshold.

The fuel is injected into the combustion chamber during the second operating state, to cause the fuel to be heated and auto-ignite in the combustion chamber.

According to a fourth aspect of the present disclosure, a vehicle is provided. The vehicle includes a vehicle body and the foregoing engine. The engine is arranged on the vehicle body.

In this embodiment of the present disclosure, the exhaust heat of the combustion chamber is 35% to 45% of the heat generated from the combustion of the fuel. A high exhaust heat provides sufficient energy for the utilization of exhaust gas.

In addition, the heat emitted outward from the combustion chamber is less than or equal to 20% of the heat generated from the combustion of the fuel, which effectively increases the exhaust heat.

Through detailed description of exemplary embodiments of the present disclosure with reference to the following drawings, other features and advantages of the present disclosure become clear.

## BRIEF DESCRIPTION OF THE DRAWINGS

Drawings that are incorporated into and constitute a part of the specification illustrate embodiments of the present disclosure, and are used to explain the principle of the present disclosure together with the description thereof.

FIG. 1 is a cross-sectional view of an engine according to an embodiment of the present disclosure; and
FIG. 2 is a cross-sectional view of another engine according to an embodiment of the present disclosure.

In the drawings:
100. Engine body; 101. Cylinder; 102. Combustion chamber; 103. Cylinder liner; 104. Piston; 105. Fuel injection nozzle; 106. Intake system; 107. Exhaust system; 108. Control apparatus; 109. Cooling apparatus; 110. Spark plug; 111. Temperature sensor; 113. Thermal insulation coating; 114. Throttle valve; 115. Turbine; 116. Rotating shaft; 117. Compressor wheel; 118. Generator; 119. Gas return branch pipe; 120. Exhaust gas cooler; 121. Rankine circulation module; 126. Exhaust branch pipe; 127. First valve; 128. Intake branch pipe; 129. Second valve; 130. Third valve.

## DETAILED DESCRIPTION

Various exemplary embodiments of the present disclosure are described in detail with reference to drawings. It should be noted that unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use thereof.

Technologies, methods, and devices known to a person of ordinary skill in the related art may not be discussed in detail, but where appropriate, the techniques, the methods, and the devices should be considered as part of the specification.

In all examples shown and discussed herein, any specific value should be construed as merely exemplary and not as limitations. Therefore, other examples of exemplary embodiments may have different values.

It should be noted that similar reference numerals and letters denote similar items in the drawings below. Therefore, once an item is defined in a drawing, the item does not need to be further discussed in subsequent drawings.

An engine provided in the embodiments of the present disclosure is described in detail below by using a gasoline engine as an example. A person skilled in the art may learn that the engine provided in the embodiments of the present disclosure may further be an engine of another fuel, such as natural gas, methanol, ethanol, and diesel. The engine is applied to an automobile, a ship, an airplane, a compression machine, a construction machinery, or the like.

In the related art, an exhaust system of an engine has a low temperature. Therefore, the exhaust utilization apparatus obtains little energy, and utilizes little energy, and thus cannot provide services to the engine or other components more effectively.

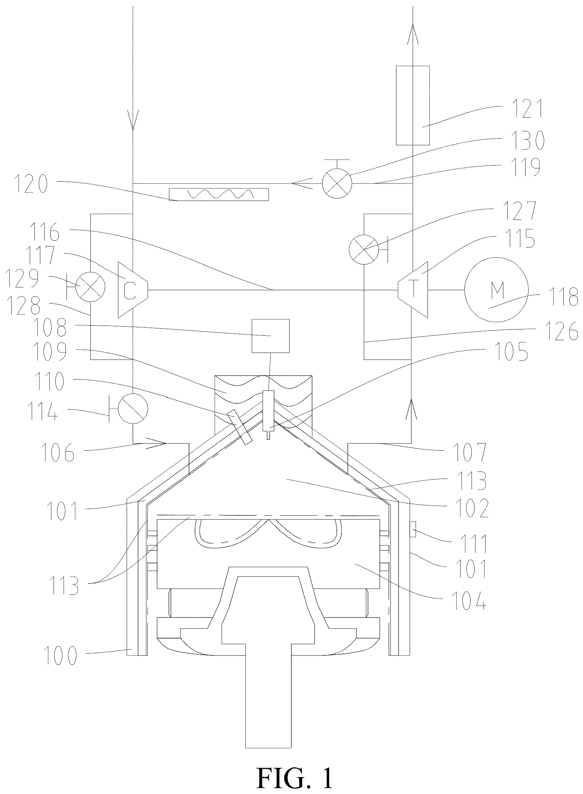

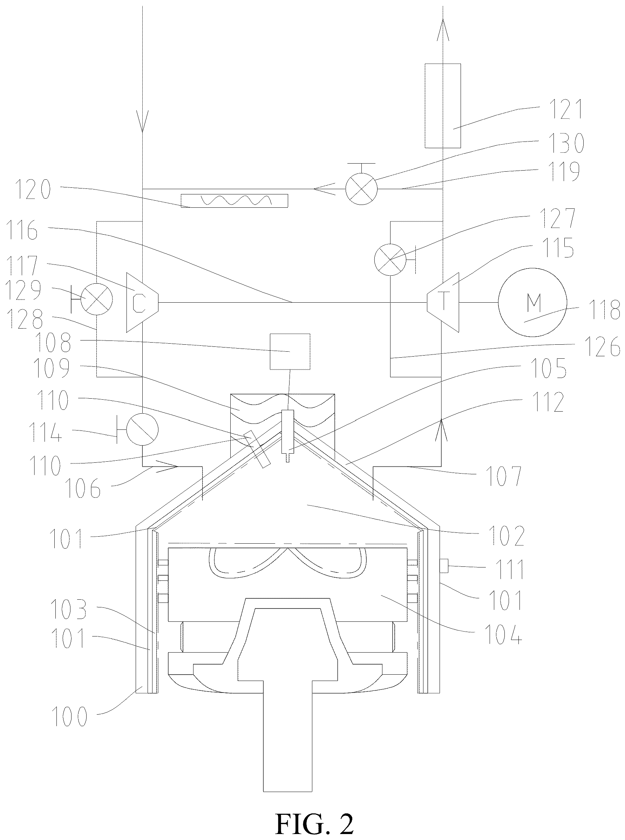

According to an embodiment of the present disclosure, an engine is provided. As shown in FIG. 1 and FIG. 2, the engine includes an engine body 100, a fuel injection system, and a piston 104. A cylinder 101 is formed in the engine body 100. The piston 104 is slidably arranged in the cylinder 101. A combustion chamber 102 is formed between the piston 104 and an inner wall of the cylinder 101. The fuel injection system is connected to the combustion chamber 102 and is configured to inject fuel into the combustion chamber 102.

In an operating cycle of the engine, total energy generated from the combustion of the fuel in the combustion chamber 102 is Q1, exhaust heat of the combustion chamber 102 is Q2, and heat emitted outward from the combustion chamber 102 is Q3.

$$35\% \leq Q2{:}Q1 \leq 45\%, \text{ and } Q3{:}Q1 \leq 20\%.$$

Specifically, the engine body 100 is made of metal, such as stainless steel, carbon steel, and cast iron. The fuel injection system is configured to inject the fuel into the combustion chamber 102. The fuel may be, but is not limited to, gasoline, natural gas, methanol, or ethanol. The combusted fuel pushes the piston 104 to move, to convert thermal energy into mechanical energy. The engine further includes an intake system and an exhaust system. The intake system and the exhaust system are arranged on the engine body 100. The intake system is configured to supply air to the combustion chamber 102. The exhaust system is configured to discharge an exhaust gas generated from the combustion of the fuel out of the combustion chamber 102.

The fuel injection system may supply the fuel to the combustion chamber 102 through direct injection. For example, the fuel is injected into the combustion chamber 102 through a fuel injection nozzle 105. The fuel mixes with air entering the combustion chamber 102 through an intake channel in the combustion chamber 102, to form a gas mixture for combustion.

Alternatively, the fuel injection system may supply the fuel in an indirect supply manner. For example, the fuel injection system injects the fuel into the intake channel. In the intake channel, the fuel premixes with the air. Then the fuel enters the combustion chamber 102 with the air in the intake channel and mixes with the air, so as to form a gas mixture for combustion. Methods of calculating the total energy Q1 generated from the combustion of the fuel in the combustion chamber 102, the exhaust heat Q2 of the combustion chamber 102, and the heat Q3 emitted outward from the combustion chamber 102 are common knowledge in the art. Details are not described herein.

In this embodiment of the present disclosure, the exhaust heat of the combustion chamber 102 is 35% to 45% of the heat generated from the combustion of the fuel. A high exhaust heat provides sufficient energy for the utilization of exhaust gas.

To realize that the exhaust heat is 35% to 45% of the heat generated from the combustion of the fuel, in the embodiment of the present disclosure, the heat emitted outward from the combustion chamber 102 is reduced. In other words, the heat emitted outward from the combustion chamber 102 is less than or equal to 20% of the heat by the combustion of the fuel. In a case that a specific amount of heat is generated from the combustion of the fuel, after the heat emitted outward is reduced, energy generated from work done by the piston 104 and the exhaust heat increase. However, the energy generated from work done by the piston 104 generally accounts for 40% to 50% of the energy produced by the combustion of the fuel, and is difficult to continue to increase. In this way, that the exhaust heat is 35% to 45% of the heat generated from the combustion of the fuel is realized.

The heat emitted outward from the combustion chamber 102 may be reduced in multiple methods. For example, a cooling amount of a cooling system, that is, a water jacket structure may be reduced. For another example, the water jacket structure may be removed. For another example, a heat preservation apparatus may be arranged to heat the combustion chamber. For another example, a temperature difference between the inside and the outside of the combustion chamber 102 may be reduced through a heating apparatus.

It should be noted that after the heat emitted outward from the combustion chamber 102 is reduced, a temperature of the engine body on an outer side the combustion chamber 102 is relatively high. Impact of a high temperature on strength of the engine body 100 may be overcome in multiple methods. For example, the engine body is arranged as an integral engine body, or the engine body is formed by using a material having a higher heat resistance, or a thermal insulation structure is arranged outside the combustion chamber 102, to reduce outward heat radiation of the combustion chamber 102. A specific method may be adaptively selected by a person skilled in the art based on an actual situation under the guidance of this embodiment of the present disclosure.

In an example, the engine further includes an exhaust system 107 and an exhaust utilization apparatus. The exhaust system 107 is in communication with inside of the combustion chamber 102. The exhaust utilization apparatus is connected to the exhaust system 107.

The exhaust system 107 discharges the exhaust gas out of the combustion chamber 102. The exhaust system 107 is connected to the exhaust utilization apparatus, so as to deliver the exhaust gas to the exhaust utilization apparatus. The exhaust utilization apparatus can use energy of the exhaust gas, so as to improve an energy utilization rate of the engine.

The exhaust utilization apparatus may be, but is not limited to, a power generation apparatus, a heating apparatus, a turbocharging apparatus, or the like. In this example, since the exhaust heat of the combustion chamber 102 is high, the exhaust utilization apparatus has a high efficiency.

In an example, the exhaust utilization apparatus includes a turbocharging module. The turbocharging module includes a turbine 115, a rotating shaft 116, and a compressor wheel 117. The turbine 115 and the compressor wheel 117 are both drivingly connected to the rotating shaft 116. The turbine 115 is located in the exhaust system 107. The compressor wheel 117 is located in an intake system 106.

In this example, the turbine 115 is configured to convert flow energy of the exhaust gas into rotation energy of the turbine 115. The exhaust gas drives the turbine 115 to rotate. The turbine 115 drives the rotating shaft 116 to rotate. The rotating shaft 116 drives the compressor wheel 117 to rotate. The compressor wheel 117 is located in the intake system 106, which can effectively increase intake air flow of air entering the combustion chamber 102, thereby improving intake efficiency. A throttle valve 114 is arranged on the intake system 106. The throttle valve 114 is configured to adjust the intake air flow of the intake system 106. Since the exhaust heat of the combustion chamber 102 is high, the exhaust gas has a high flow rate and air pressure, which can significantly improve operating efficiency of the turbocharging module.

In an example, the intake system 106 is further provided with an intake branch pipe 128. The intake branch pipe 128 is connected in parallel with the turbocharging module. The intake branch pipe 128 can ensure the intake air flow of the intake system 106. A second valve 129 is arranged on the intake branch pipe 128. The second valve 129 is configured to control an intake air flow of the intake branch pipe 128.

In an example, the exhaust utilization apparatus includes a generator 118. A rotor of the generator 118 is drivingly connected to the turbine 115.

In this example, the rotation of the turbine 115 drives the rotor of the generator 118 to rotate, so as to convert kinetic energy of the exhaust gas into electric energy. The turbine 115 not only provides energy for an added module of the turbine 115, but also provides energy for the generator 118, thereby further improving utilization efficiency of the exhaust gas of the engine.

In an example, the exhaust utilization apparatus includes an exhaust gas recirculation module. The exhaust gas recirculation module includes a gas return branch pipe 119 and an exhaust gas cooler 120. The exhaust gas cooler 120 is arranged on the gas return branch pipe 119. One end of the gas return branch pipe 119 is connected to the exhaust system 107. Another end of the gas return branch pipe is connected to the intake system 106 of the engine.

In this example, the gas return branch pipe 119 delivers a part of the exhaust gas to the intake system 106. The gas return branch pipe 119 is provided with a third valve 130. The third valve 130 is configured to control an exhaust gas flow of the gas return branch pipe 119. Because the exhaust gas has a high temperature, the air in the intake system 106 can be heat up, to increase the temperature of the combustion chamber 102, so that the fuel combusts more efficiently. However, if an intake temperature is excessively high, the air is heated and expanded, which results in a decrease in the intake air flow within the intake system 106 and insufficient fuel combustion. The exhaust gas cooler 120 can effectively prevent an excessively high temperature of the exhaust gas entering the intake system 106, thereby ensuring that the intake air flow in the intake system 106 is sufficient.

In addition, through the exhaust gas of the gas return branch pipe 119, an amount of NOx discharged from the combustion chamber 102 can also be controlled, and emission of nitrates from the engine can be reduced.

In an example, the exhaust utilization apparatus includes a Rankine circulation module 121. The Rankine circulation module 121 includes a circulation pipeline, a heat exchanger, an expander, a condenser, and a pump body. The heat exchanger, the expander, the condenser, and the pump body are connected end to end through the circulation pipeline.

The heat exchanger has a first heat exchange channel and a second heat exchange channel. The first heat exchange channel is in communication with the exhaust system 107. The second heat exchange channel is in communication with the circulation pipeline.

In this example, the exhaust system 107 is provided with an exhaust branch pipe 126. A first valve 127 is arranged on the exhaust branch pipe 126. The first valve 127 is configured to control an exhaust gas flow of the exhaust branch pipe 126. The exhaust branch pipe 126 is connected in parallel with the turbocharging module, so as to ensure an exhaust gas flow of the Rankine circulation module 121. The heat of the exhaust system 107 is thermally exchanged to the first heat exchange channel. The first heat exchange channel and the second heat exchange channel are coupled together in a heat exchange manner. The heat is thermally exchanged to the second heat exchange channel from the first heat exchange channel. The water in the second heat exchange channel is heated, so as to generate high-pressure steam. The high-pressure steam reaches the expander through the circulation pipeline. The high-pressure steam expands in the expander to form low-pressure steam. The high-pressure steam and the low-pressure steam generate a pressure difference. The pressure difference pushes a steam turbine to work, so as to generate electricity. The low-pressure steam is condensed into water by the condenser. The condensed water is transported by the pump body through the circulation pipeline to the second heat exchange channel, and then heated to achieve circulation. In the circulation process, because the temperature of the exhaust gas of the engine is high, work efficiency of the Rankine cycle can be significantly improved.

In an example, the exhaust utilization apparatus includes at least one of a thermoelectric power generation module, a refrigeration and air conditioning module, and a waste heat heating module. The foregoing modules can all use the energy of the exhaust gas, so as to provide services to a device in which the engine is located.

In an example, the engine further includes a heat preservation apparatus. The heat preservation apparatus is arranged in the engine body. The heat preservation apparatus is configured to retain heat within the combustion chamber.

In this example, the heat preservation apparatus can effectively prevent the heat of the combustion chamber from emitting outward. The heat preservation apparatus can effectively increase the temperature of the combustion chamber, so that the temperature of the exhaust heat significantly increases, and the heat of the exhaust gas is increased. In this way, $35\% \leq Q2:Q1 \leq 45\%$, and $Q3:Q1 \leq 20\%$.

In addition, the heat preservation apparatus can maintain a higher temperature in the combustion chamber 102, which significantly improves thermal efficiency of the engine.

In an example, the heat preservation apparatus includes the heat preservation structure. A thermal insulation chamber is formed in the heat preservation structure. The heat preservation structure is arranged on an outer side of the cylinder 101 and around the cylinder 101.

For example, a hollow chamber is arranged on the engine body 100. The hollow chamber constitutes the thermal insulation chamber. The thermal insulation chamber can effectively isolate the combustion chamber 102.

Alternatively, the heat preservation structure may include an original water jacket structure of the engine body 100. The water jacket structure forms the thermal insulation chamber. The water jacket structure is arranged on an outer side of the cylinder 101 and arranged around the cylinder 101. The engine removes coolant, so that the water jacket structure can effectively insulate the combustion chamber 102.

In this example, an insulating cotton may be arranged in the thermal insulation chamber. The heat preservation cotton can effectively perform an insulation function.

Alternatively, the thermal insulation chamber may be evacuated, so as to maintain a set level of vacancy in the thermal insulation chamber. The evacuated thermal insulation chamber can achieve a heat preservation function, so that the combustion chamber 102 can be effectively insulated.

Alternatively, only a cavity structure of the cylinder 101 is cast on the engine body 100, and a cavity structure of the water jacket structure is no longer cast, so that the engine body 100 is directly used to insulate the combustion chamber 102.

Certainly, the heat preservation structure is not limited to the foregoing embodiment, which may be arranged by a person skilled in the art based on an actual requirement.

In an example, as shown in FIG. 1, the heat preservation apparatus includes a thermal insulation coating 113. The thermal insulation coating 113 is arranged on the inner wall of the cylinder 101, or arranged on the outer side of the cylinder 101 and around the cylinder 101, or arranged on an end of the piston 104.

The thermal insulation coating 113 is configured to prevent the heat in the combustion chamber 102 from diffusing outward. For example, the thermal insulation coating 113 is made of porous anodic alumina. The porous anodic alumina is an aluminum oxide material prepared through anodizing of aluminum metal in an acidic condition. The material has a good thermal insulation effect. For example, the thermal insulation coating 113 is formed on the engine body, the cylinder, the cylinder liner, or an exhaust pipe through a powder metallurgy process.

Optionally, the thermal insulation coating 113 is made of a silicon dioxide reinforced porous anodic alumina. A silica coating with a micron thickness is formed on a surface of the porous anodic alumina. The silica coating can effectively improve wear resistance of the porous anodic alumina. The material has a characteristic of excellent thermal insulation performance, which can effectively prevent the heat of the engine from emitting outward.

It will be appreciated that the material of the thermal insulation coating 113 is not limited to the foregoing embodiment, and may be selected by a person skilled in the art based on an actual requirement.

A larger thickness of the thermal insulation coating 113 indicates a better thermal insulation effect. However, a larger thickness may cause the thermal insulation coating 113 to easily fall off from the engine body 100. Optionally, a thickness of the thermal insulation coating 113 ranges from 10 $\mu$m to 100 $\mu$m. Within the range, the thermal insulation coating 113 can effectively prevent the heat in the combustion chamber 102 from diffusing outward, and the thermal insulation coating 113 has a high bonding strength with the engine body 100.

The thermal insulation coating 113 is attached to the inner wall of the cylinder 101, or the thermal insulation coating 113 is located on the engine body 100 and arranged around the cylinder 101. The thermal insulation coating 113 has a good thermal insulation effect at the foregoing position.

Alternatively, the thermal insulation coating 113 is arranged on an end of the piston 104. In this example, the thermal insulation coating 113 located at the end of the piston 104 can effectively prevent the heat of the combustion chamber 102 from being dissipated through the piston 104.

In a specific example, the thermal insulation coating 113 is attached to an original water jacket of the engine body 100. The water jacket is arranged around the combustion chamber 102. The thermal insulation coating 113 is arranged on an inner wall of the water jacket. The thermal insulation coating 113 can provide a good thermal insulation function.

In an example, as shown in FIG. 2, the engine body 100 includes a cylinder liner 103. The cylinder liner 103 is arranged in the cylinder 101. An outer wall of the cylinder liner 103 is attached to an inner wall of the cylinder 101. The piston 104 is located in the cylinder liner 103.

A material of the cylinder liner 103 is harder than a material of the inner wall of the cylinder 101, and has good wear resistance. The cylinder liner 103 can effectively improve a service life of the engine.

In an example, the engine further includes a heat preservation apparatus. The heat preservation apparatus is arranged in the engine body 100. The heat preservation apparatus is configured to retain heat within the combustion chamber 102. The heat preservation apparatus includes the thermal insulation coating 113. The thermal insulation coating 113 is arranged between the inner wall of the cylinder 101 and the cylinder liner 103, or the thermal insulation coating 113 is arranged on the inner wall of the cylinder liner 103.

For example, the material and the thickness of the thermal insulation coating 113 are as described above. The thermal insulation coating 113 is arranged on at least one of the outer wall of the cylinder liner 103 and the inner wall of the cylinder 101. The thermal insulation coating 113 can effectively perform a function of heat insulation. In addition, the thermal insulation coating 113 at the position is less susceptible to an external impact, and has good durability.

Alternatively, the thermal insulation coating 113 is arranged on an inner wall of the cylinder liner. The thermal insulation coating 113 at this position is closer to the combustion chamber 102, which can achieve a function of heat preservation and heat insulation more effectively.

In an example, the engine further includes a heating apparatus. The heating apparatus includes an electric heating unit. The electric heating unit is arranged between the inner wall of the cylinder and the outer wall of the cylinder liner.

The electric heating unit heats the combustion chamber 102, so that the temperature of the combustion chamber 102 is significantly increased. The exhaust temperature can be higher, which effectively improves an exhaust utilization rate. In this way, $35\% \leq Q2:Q1 \leq 45\%$.

In addition, the electric heating unit is arranged between the inner wall of the cylinder 101 and the cylinder liner 103, which can avoid impact from an external force, thereby significantly improving durability of the engine.

In addition, the electric heating unit blocks a path in which the heat in the combustion chamber is emitted outward, and further reduces an amount of heat emitted from the engine. In this way, $Q3:Q1 \leq 20\%$.

In a preferred embodiment, the water jacket structure is removed or a cooling capacity of the water jacket structure is reduced, to reduce the heat emitted outward from the combustion chamber.

Based on this preferred embodiment, the inventor further finds that, the temperature of the inner wall of the combustion chamber 102 in this case is relatively high, and even exceeds an auto-ignition temperature of the fuel in the combustion chamber 102 in a current state. Based on the above, further considering that a method of igniting fuel through a spark plug for combustion in the related art may cause a knock to the engine at a high compression ratio, the inventor has pioneered a combination of improving exhaust gas energy and reducing knock risk, and found a method of directly igniting the fuel through the inner wall of the combustion chamber 102 to implement combustion of the fuel. In this way, the heat emitted outward from the combustion chamber is reduced, which improves exhaust gas utilization efficiency. In addition, the saved heat may be used to heat the inner wall of the combustion chamber 102, to cause the fuel to auto-ignite through a high temperature, which reduces the knock risk of the engine. Therefore, the compression ratio of the engine can reach 16 or more, or even 18 or 20 or more.

In an example, the fuel injection system is configured to inject the fuel into the combustion chamber 102 after a temperature in the combustion chamber 102 reaches a set threshold, to cause the fuel to be heated and auto-ignite in the combustion chamber 102. When the temperature in the combustion chamber 102 is greater than or equal to the set threshold, the temperature in the combustion chamber 102 can reach the auto-ignition temperature of the fuel during a compression stroke.

It should be noted that although the inventor conceives the embodiment of igniting the fuel through the high temperature to cause the fuel to auto-ignite based on the preferred embodiment of removing the water jacket structure or reducing the cooling capacity of the water jacket structure, the embodiment of igniting the fuel through the high temperature to cause the fuel to auto-ignite unnecessarily needs to be implemented based on the embodiment of removing the water jacket structure or reducing the cooling capacity of the water jacket structure. Other manners such as arranging a corresponding heat preservation apparatus or heating apparatus without removing the water jacket structure and without changing the cooling capacity of the water jacket structure may be used to increase the temperature in the combustion chamber 102, so that the fuel auto-ignites.

The so-called auto-ignition in the present disclosure means that the fuel auto-ignites. Conditions required for the auto-ignition include fuel concentration, a comburent, a temperature reaching an auto-ignition temperature or above, and the like. In the related art, an engine typically ignites fuel in a combustion chamber through a spark plug. The so-called ignition in the present disclosure means that the fuel combusts under an action of a high-temperature point such as a spark or an electric arc.

When the engine is in the compression stroke, the piston 104 moves from a bottom dead center to a top dead center. In this process, mechanical energy is converted into internal energy. During the compression stroke, the fuel injection system is controlled to inject the fuel into the combustion chamber 102. Because the temperature in the combustion chamber 102 reaches a set threshold, the fuel is heated and auto-ignites under the condition. The fuel after auto-ignition generates a large amount of gas, to push the piston 104 to move from the top dead center to the bottom dead center. Therefore, during a work stroke, a crank is driven by the piston 104 to rotate, thereby converting the internal energy into mechanical energy. When the engine is in the compression stroke, an intake valve and an exhaust valve are closed.

In this example, before the fuel injection system injects the fuel into the combustion chamber 102, the temperature in the combustion chamber 102 reaches the set threshold. In this case, the temperature in the combustion chamber 102 can reach the auto-ignition temperature of the fuel during the compression stroke, so that the fuel combusts spontaneously. In the present disclosure, because a combustion mode of heating the fuel to auto-ignition is adopted in the present disclosure, when the engine is in the compression stroke, the fuel gradually mixes with the air and is heated up after being injected through a fuel injection nozzle 105. Flame in the combustion chamber 102 starts from an end of a fuel injection spray (that is, an end close to the piston) and gradually spreads upward. Essentially, the combustion mode of heating to auto-ignition radically avoids a knock.

The set threshold is related to factors such as type of fuel, air pressure of the gas mixture, amount of injected fuel, and intake air flow. Certainly, a person skilled in the art may choose the set threshold according to an actual operating condition.

In an example, the engine further includes a heating apparatus. The heating apparatus is configured to heat the combustion chamber, to cause the temperature in the combustion chamber 102 to reach the set threshold.

To avoid a problem that the fuel cannot spontaneously combust due to the low temperature of the combustion chamber, the engine is provided with the heating apparatus. For example, the heating apparatus can heat the cylinder, so that the inner wall of the combustion chamber warms up. Therefore, the temperature of the combustion chamber increases, and the fuel can spontaneously combust.

In addition, the heating apparatus increases the temperature in the combustion chamber 102 as a whole. In this way, the flame of the combustion chamber 102 starts from an end (that is, an end close to the piston) of the fuel injection beam and spreads upward more rapidly, thereby avoiding knock of the engine.

In an example, the heating apparatus includes: a spark plug, configured to ignite the fuel to heat the combustion chamber through heat of the fuel; and/or an electric heating unit, configured to electrically heat the combustion chamber.

In this example, in a warm-up state, to heat the temperature in the combustion chamber of the engine to the set threshold, a spark plug 110 may be used to ignite the fuel. The heat is generated when the fuel combusts. The heat is used for heating the combustion chamber 102. In this manner, the spark plug 110 of an original engine is used to heat the combustion chamber 102. When the temperature of the combustion chamber 102 is greater than the set threshold, the fuel injected by the fuel injection system can spontaneously combust. In a non-warm-up state, the spark plug 110 does not need to be started again, and the temperature of the combustion chamber 102 is directly maintained by using the heat of burning of the combustion chamber 102, so that the fuel injected by the fuel injection system into the combustion chamber 102 can spontaneously combust.

It should be noted that the warm-up state and the non-warm-up state in this embodiment of the present disclosure are different from a warm-up state and a non-warm-up state in the related art. In the related art, a period of time in which components of the engine are increased to a temperature at which the components have relatively high operating efficiency after the engine is started is generally referred to as an engine warm-up or preheating period. Generally, during the compression stroke, the temperature in the combustion chamber 102 can only reach a temperature below 250°C, and usually can only reach a temperature below 200°C. In this embodiment of the present disclosure, a warm-up stage in which the temperature in the combustion chamber 102 of the engine rises approximately to 300°C or 400°C during the compression stroke is referred to as the warm-up state, to ensure that the fuel can enter the combustion chamber 102 in the non-warm-up state and can be heated and spontaneously combust.

It should be noted that the heating manner of using the heat of the fuel to heat the combustion chamber 102 by igniting the fuel through the spark plug 110 is only applicable to heating the engine in the warm-up state of the engine. In the non-warm-up state, if the combustion chamber 102 needs to be heated by using the spark plug to ignite the fuel, control of the engine becomes complex. Different power and torques are outputted by different operating cycles, which affects smoothness of operation of the engine.

Alternatively, the engine body 100 is provided with the electric heating apparatus. The electric heating apparatus is configured to heat the combustion chamber 102. To be specific, in the warm-up state or the non-warm-up state, to increase the temperature in the combustion chamber 102 of the engine to and above the set threshold, the combustion chamber 102 can be heated through the electric heating apparatus.

For example, the electric heating apparatus is arranged around the combustion chamber 102. The combustion chamber 102 is heated more rapidly through the electric heating apparatus. Performing heating through the electric heating apparatus can effectively control the temperature in the combustion chamber 102, which ensures that the fuel injected from the fuel injection system into the combustion chamber 102 can spontaneously combust.

For example, the electric heating apparatus includes a power supply, a switch, and a heating resistor. The power supply is electrically connected to the switch and the heating resistor. The power supply is configured to supply power to the heating resistor. The switch is configured to control the on/off state of a heating current. The electric heating apparatus can rapidly heat the combustion chamber 102.

The electric heating apparatus can operate and maintain the temperature of the combustion chamber to rise when the temperature in the combustion chamber 102 drops unexpectedly in the non-warm-up stage of the engine. The electric heating apparatus can further heat the combustion chamber 102 in the warm-up stage of the engine, so that the characterizing temperature reaches the set temperature.

Certainly, the method of heating the combustion chamber is not limited to the foregoing embodiments, which may be arranged by a person skilled in the art based on an actual requirement.

In an example, an excess air coefficient of the engine is greater than or equal to 1.

The excess air coefficient refers to a ratio of an air amount that is actually provided to combust the fuel to an air amount that is theoretically needed. As the temperature of the combustion chamber increases, the air pressure in the combustion chamber increases, which leads to a decrease in the amount of air that enters the combustion chamber when the intake valve is opened.

In this example, the excess air coefficient is greater than or equal to 1, so as to avoid insufficient combustion of the fuel due to an insufficient intake air flow, effectively ensure sufficient combustion of the fuel, and improve a fuel utilization rate.

According to another embodiment of the present disclosure, a method for controlling an engine is provided. The control method includes the following steps.

A characterizing temperature characterizing a temperature in a combustion chamber is obtained.

A fuel injection system is controlled based on a preset rule to inject fuel into the combustion chamber when an engine is in a compression stroke. The fuel in the combustion chamber is heated and spontaneously combusts. An input parameter of the preset rule includes the characterizing temperature.

The temperature in the combustion chamber 102 is mainly characterized by the temperature of the inner wall of the combustion chamber, and the combustion chamber is affected by heat generated from combustion of the fuel in an operating cycle of an engine, and fluctuates in a specific range. During the compression stroke, the temperature of the inner wall of the combustion chamber is higher than the temperature of the gas inside the combustion chamber 102. When the fuel is injected, after the fuel contacts the inner wall of the combustion chamber 102 that has a relatively high temperature, the fuel is heated and spontaneously combusts, thereby avoiding a knock risk.

In this embodiment of the present disclosure, the fuel injection nozzle 105 of the fuel injection system is opposite to the top of the piston 104, to ensure that at least a part of the fuel can fall on the top of the piston 104 after being injected, so that the fuel starts to spontaneously combust from above the top of the piston 104 and gradually diffuses upward to combust.

For example, a characterizing temperature characterizing a temperature in the combustion chamber 102 is obtained. During the compression stroke, when the characterizing temperature reaches a set value, the fuel injection system is controlled to inject the fuel into the combustion chamber 102, thereby causing the fuel to spontaneously combust. The control method can accurately control the fuel injection system to inject the fuel, thereby ensuring that the fuel sufficiently combusts.

In addition, before the fuel injection system injects the fuel into the combustion chamber 102, the temperature in the combustion chamber 102 reaches a set threshold, and combustion is performed by the auto-ignition of the fuel. In this way, the phenomenon of knock of the engine generated in a manner of compressing and igniting by the spark plug 110 can be effectively avoided, so that the engine is started more smoothly.

Specifically, as shown in FIG. 2, a temperature sensor 111 is arranged on an engine. The temperature sensor 111 is configured to obtain a characterizing temperature characterizing a temperature in a combustion chamber 102. For example, the characterizing temperature is a temperature of a defined position. A defined position closer to the combustion chamber 102 has a temperature closer to that in the combustion chamber 102.

When the engine is in the compression stroke, the piston 104 moves from a bottom dead center to a top dead center. In this process, mechanical energy is converted into internal energy. During the compression stroke, the fuel injection system is controlled to inject the fuel into the combustion chamber 102. Because the temperature in the combustion chamber 102 reaches a set threshold, the fuel is heated and spontaneously combusts under the condition. The fuel after auto-ignition generates a large amount of gas, to push the piston 104 to move from the top dead center to the bottom dead center. Therefore, during a work stroke, a crank is driven by the piston 104 to rotate, thereby converting the internal energy into mechanical energy.

The preset rule is a rule for controlling the engine to inject fuel so that the fuel can auto-ignite. It may be determined, based on an input parameter, whether the input parameter satisfies a relevant condition. Then, a result indicating whether to inject fuel, an amount of injected fuel, a fuel injection moment, a fuel injection frequency, and the like is outputted. The preset rule may be preset based on a compression ratio of the engine, a type of the fuel, an operating parameter of the engine, and the like.

For example, the input parameter of the preset rule includes the characterizing temperature characterizing the temperature in the combustion chamber. A determining condition for the characterizing temperature is to determine whether the characterizing temperature is greater than a set temperature. If yes, a result of injecting the fuel is outputted. If no, a result of not injecting fuel is outputted. When the characterizing temperature is equal to the set temperature, it indicates that the temperature in the combustion chamber 102 reaches the set threshold. Under the set threshold, the temperature in the combustion chamber 102 can reach an auto-ignition temperature of the fuel during the compression stroke, so that the fuel can be heated and auto-ignite.

To make use of the high temperature in the combustion chamber 102 and enable the fuel injected into the combustion chamber 102 to auto-ignite during the compression stroke, according to a third embodiment of the present disclosure, a method for controlling an engine is provided. The engine has a first operating state and a second operating state. The control method includes the following steps.

The temperature in the combustion chamber 102 of the engine is increased to the set threshold through heating during the first operating state. When the temperature in the combustion chamber 102 is greater than or equal to the set threshold, the temperature in the combustion chamber 102 can reach the auto-ignition temperature of the fuel during a compression stroke.

The fuel is injected into the combustion chamber 102 during the second operating state, so that the fuel is heated and auto-ignites in the combustion chamber 102.

During actual operation of the engine, the engine in this embodiment of the present disclosure has a first operating state (also referred to as a warm-up state, a warm-up stage, or a first operating stage) and a second operating state (also referred to as a non-warm-up state, a non-warm-up stage, or a second operating stage) between which the engine can be switched. The method for controlling an engine in this embodiment of the present disclosure includes the following steps. The temperature in the combustion chamber 102 of the engine is increased to the set threshold through heating during the first operating state. When the temperature in the combustion chamber 102 is greater than or equal to the set threshold, the temperature in the combustion chamber 102 can reach the auto-ignition temperature of the fuel during the compression stroke. The fuel is injected into the combustion chamber 102 during the second operating state, so that the fuel is heated and auto-ignites in the combustion chamber 102.

That a characterizing temperature characterizing a temperature in a combustion chamber 102 is obtained may be performed during the first operating state or during the second operating state. The fuel injection system is controlled to inject fuel into the combustion chamber based on the preset rule when an engine is in the compression stroke. The fuel in the combustion chamber 102 is heated and auto-ignites, which occurs during the second operating state.

It should be noted that the warm-up state and the non-warm-up state in this embodiment of the present disclosure are different from a warm-up state and a non-warm-up state in the related art. In the related art, a period of time in which components of the engine are increased to a temperature at which the components have relatively high operating efficiency after the engine is started is generally referred to as an engine warm-up or preheating period. Generally, during the compression stroke, the temperature in the combustion chamber 102 can only reach a temperature below 250°C, and usually can only reach a temperature below 200°C. In this embodiment of the present disclosure, a warm-up stage in which the temperature in the combustion chamber 102 of the engine rises approximately to 300°C or 400°C during the compression stroke is referred to as the warm-up state, to ensure that the fuel can enter the combustion chamber 102 in the non-warm-up state and can be heated and auto-ignite.

It should be noted that impact of a high temperature on strength of the engine body may be overcome in multiple manners. For example, the engine body is arranged as an integral engine body, or the engine body is formed by using a material having a higher heat resistance, or a thermal insulation structure is arranged outside the combustion chamber 102, to reduce outward heat radiation of the combustion chamber 102. A specific method may be adaptively selected by a person skilled in the art based on an actual situation under the guidance of this embodiment of the present disclosure.

In the warm-up state, the temperature in the combustion chamber 102 does not reach the set threshold. In this case, a result outputted based on the preset rule is do not inject fuel. In other words, in this case, the fuel cannot achieve auto-ignition in the combustion chamber 102. Therefore, the preset rule is not met. In the warm-up state, the fuel injection system may inject the fuel under an action of another rule. For example, to ensure consistent power output, in the method for controlling an engine in this embodiment of the present disclosure, the combustion chamber 102 may be heated while the engine is controlled to normally ignite the fuel normally with the spark plug, so as to implement normal operation of the engine.

In the non-warm-up state, the fuel can implement auto-ignition in the combustion chamber 102. Therefore, the preset rule is met. The fuel injection system is controlled to inject the fuel into the combustion chamber 102 based on the preset rule. The fuel in the combustion chamber 102 is heated and auto-ignites.

It should be noted that the auto-ignition temperature of the fuel in this embodiment of the present disclosure refers to the auto-ignition temperature of the fuel in the combustion chamber 102 in the current state, which is related to factors such as a pressure, a temperature, an air flow, and a fuel amount in the combustion chamber 102, and may be obtained through real-time calculation after collection of related data, or may be obtained through searching of a table with calibrated auto-ignition temperatures in various operating conditions.

The engine may be controlled to switch between the warm-up state and the non-warm-up state in multiple manners. For example, in the method for controlling an engine in this embodiment of the present disclosure, the operating state of the engine may be switched based on an operating time of the engine. For example, when the engine is started, the engine enters the warm-up state by default. After the engine is started and operates for a set time, the engine is controlled to enter the non-warm-up state. After the engine is started and operates for the set time, the temperature in the combustion chamber 102 increases to the set threshold. In this case, it is considered that warm-up is completed.

In the method for controlling an engine in this embodiment of the present disclosure, the operating state of the engine may be further switched based on the temperature in the combustion chamber 102. For example, the characterizing temperature characterizing the temperature in the combustion chamber 102 is obtained. When the characterizing temperature is the set temperature, it indicates that the temperature in the combustion chamber 102 is the set threshold. When the characterizing temperature is less than the set temperature, the engine enters the warm-up state and operates. When the characterizing temperature is greater than or equal to the set temperature, the engine enters the non-warm-up state and operates.

When the engine is in the warm-up state, the characterizing temperature is obtained at a first frequency.

When the engine enters the non-warm-up state and operates, the characterizing temperature characterizing the temperature in the combustion chamber 102 may not be obtained. The engine keeps operating in the non-warm-up state before the engine is stopped. Alternatively, the characterizing temperature characterizing the temperature in the combustion chamber 102 may be re-obtained at a second frequency, and it is determined whether the engine needs to enter the warm-up state again or needs to keep the non-warm-up state to heat the combustion chamber 102. The second frequency may be less than the first frequency. In the method for controlling an engine in this embodiment of the present disclosure, during the non-warm-up state, when the characterizing temperature is less than the set temperature, the temperature in the combustion chamber 102 of the engine is increased to the set threshold through heating, so as to ensure that the combustion chamber can be reheated to a temperature greater than the set threshold in time when the combustion chamber 102 of the engine cools down.

Optionally, the input parameter of the preset rule further includes at least one of a compression ratio of the engine, a crank angle of the engine, a camshaft phase of the engine, a rotation speed of the engine, a pressure value in the combustion chamber 102, an intake air flow of the combustion chamber 102, an amount of fuel injected from the combustion chamber 102, and a type of the fuel. Under a condition that the preset rule is met, the fuel injection system injects the fuel into the combustion chamber 102, so that the fuel is heated and auto-ignites in the combustion chamber 102.

The compression ratio indicates a degree to which gas in the cylinder 101 is compressed when the piston 104 is moved from the bottom dead center to the top dead center. For example, the compression ratio is a ratio of a total volume of the cylinder 101 before compression to a volume of the cylinder 101 after compression.

A larger rotation speed of the engine indicates a higher frequency of injecting the fuel. For example, in a four-stroke engine, for every two rotations of a crank, the combustion chamber 102 completes one combustion and a fuel injection nozzle injects one fuel. In other words, a fuel injection frequency is equal to a half of a rotation speed.

The pressure value in the combustion chamber 102 is related to parameters such as compression ratio, intake air flow, exhaust gas flow, amount of injected fuel, and temperature. The present disclosure considers the pressure value in the combustion chamber 102 which in fact comprehensively considers the parameters such as the compression ratio, the intake air flow, the exhaust gas flow, the amount of injected fuel, and the temperature in the combustion chamber.

The intake air flow and the exhaust gas flow are related to the amount of injected fuel. A larger intake air flow and a larger exhaust gas flow indicate a larger amount of injected fuel.

A higher fuel injection pressure indicates a faster fuel injection velocity. The fuel can quickly enter the combustion chamber and be heated. In addition, a higher fuel injection pressure indicates a wider selection range of fuel injection timing.

The camshaft phase of the engine and the crank angle of the engine are used for controlling timing of opening and closing of an intake valve and/or an exhaust valve of the engine. The camshaft phase refers to a rotation phase in which multiple cams on the camshaft open and close the intake valve and/or the exhaust valve. The crank angle refers to an angle of rotation of the crank. The crank and camshaft may be synchronously rotated by a timing mechanism. By controlling the camshaft phase of the engine or the crank angle of the engine, the timing of opening and closing of the intake valve and/or the exhaust valve of the engine can be effectively controlled, so that the operating efficiency of the engine is higher. The rotation speed of the engine is a rotation speed of the crank.

Different types of the fuel and different fuel injection pressures indicate different auto-ignition temperatures. The types of the fuel may be gasoline, natural gas, methanol, ethanol, and the like. A fuel injection pressure value may be determined based on the compression ratio, the intake air flow, and the amount of injected fuel.

The foregoing description of the preset rule is merely an example. In a specific working process, under the guidance of the present disclosure, a person skilled in the art may specifically set types of the input parameters of the preset rule, and correspondingly set a determining condition corresponding to the input parameters, so as to correspondingly output a result.

In an example, that a characterizing temperature characterizing a temperature in a combustion chamber 102 is obtained includes the following step. A temperature at a defined position in an engine body 100 of the engine is obtained. A distance between the defined position and the combustion chamber 102 ranges from 4 mm to 10 mm.

For example, the engine body 100 is a metal material, such as carbon steel, stainless steel, and cast iron. The metal material transfers heat rapidly. The temperature sensor 111 is arranged at a defined position of the engine body 100. A defined position closer to the combustion chamber 102 indicates a temperature sensed by the temperature sensor 111 closer to the temperature in the combustion chamber 102. Within the foregoing size range, it may be ensured that the characterizing temperature obtained by the temperature sensor 111 is closer to the temperature in the combustion chamber 102.

In an example, the engine in this embodiment of the present disclosure may be provided with a cooling water jacket, to cool the combustion chamber 102. After the cooling water jacket is arranged, the combustion chamber 102 has an outer wall. That a characterizing temperature characterizing a temperature in a combustion chamber 102 is obtained includes the following step. A temperature of the outer wall of the combustion chamber 102 is obtained. A distance between the outer wall of the combustion chamber 102 and the inner wall of the combustion chamber 102 generally ranges from 4 mm to 10 mm.

It will be appreciated, the distance between the defined position and the combustion chamber 102 is not limited to the foregoing embodiment, and may be selected by a person skilled in the art based on an actual requirement.

In an example, that a characterizing temperature characterizing a temperature in a combustion chamber 102 is obtained includes the following step. A characterizing temperature characterizing a temperature of an inner wall of the combustion chamber 102 is obtained. Generally, space in the combustion chamber 102 is limited. If the temperature sensor 111 is additionally arranged, the combustion is affected. Therefore, the temperature sensor 111 cannot be directly arranged in the combustion chamber 102. In other words, the temperature in the combustion chamber 102 cannot be directly measured. Therefore, in this example, the temperature in the combustion chamber 102 is indirectly obtained by obtaining the temperature at another position to characterize the temperature in the combustion chamber 102. When the characterizing temperature is converted into the temperature in the combustion chamber 102, the characterizing temperature may be converted by querying calibration data, or may be calculated and converted by combining a parameter such as a thermal conductivity.

Optionally, a temperature of the engine body 100 may be obtained through the temperature sensor 111 and used as the characterizing temperature. The characterizing temperature is close to the characterizing temperature of the combustion chamber 102, thereby enabling more accurate timing of fuel injection of the fuel and more sufficient auto-ignition of the fuel.

The engine body 100 may be provided with multiple temperature sensors 111. The multiple temperature sensors 111 obtain temperatures of different parts of the engine body 100 corresponding to the combustion chamber 102. An average value of the multiple temperatures is used as the characterizing temperature characterizing the temperature in the combustion chamber 102. In this way, the characterizing temperature characterizing the temperature in the combustion chamber 102 can be obtained more accurately.

In another example, a temperature at another position may also be obtained through the temperature sensor 111 and used as the characterizing temperature. For example, a temperature at a position at which an intake channel of the engine is close to the combustion chamber 102 is obtained and used as the characterizing temperature, or a temperature at a position at which an exhaust channel of the engine is close to the combustion chamber 102 is obtained and used as the characterizing temperature, or a dimension close to the fuel injection nozzle is obtained and used as the characterizing temperature.

In an example, the preset rule includes that the temperature in the combustion chamber 102 is greater than 300°C. In other words, when the temperature in the combustion chamber 102 is greater than or equal to the set threshold, the temperature in the combustion chamber 102 can reach a temperature above 300°C during the compression stroke.

In an example, the preset rule includes that the temperature in the combustion chamber 102 is greater than 400°C. In other words, when the temperature in the combustion chamber 102 is greater than or equal to the set threshold, the temperature in the combustion chamber 102 can reach a temperature above 400°C during the compression stroke.

Specifically, it may be determined based on an actual situation whether the temperature in the combustion chamber 102 meets the preset rule. Before the piston 104 reaches a top dead center, as the piston 104 moves, an air pressure in the combustion chamber 102 gradually increases. A higher pressure in the combustion chamber 102 indicates a lower combustion point. Conversely, a lower pressure indicates a higher combustion point. A specific temperature value meeting the preset rule may be selected based on an actual situation, to ensure that the fuel auto-ignites in the combustion chamber 102. Generally, to ensure that the fuel can auto-ignite in the combustion chamber 102, the temperature in the combustion chamber 102 needs to be greater than 300°C. In some operating conditions, the temperature in the combustion chamber 102 needs to be greater than 400°C, so that the fuel can auto-ignite.

In an example, the preset rule includes that the temperature in the combustion chamber 102 is greater than the auto-ignition temperature of the fuel in the combustion chamber 102 in the current state.

The auto-ignition temperature is a minimum temperature at which the fuel can auto-ignite in an aerobic atmosphere without a spark. It should be noted that the auto-ignition temperature is related to multiple factors, for example, a fuel injection speed, the air pressure in the combustion chamber 102, an oxygen content in the combustion chamber 102, and the type of the fuel. In this example, the temperature in the combustion chamber 102 is greater than the auto-ignition temperature of the fuel in the combustion chamber 102 in the current state, so that the fuel injected from the fuel injection system into the combustion chamber 102 can auto-ignite without spark initiation.

In an example, the preset rule includes that the temperature in the combustion chamber 102 characterized by the characterizing temperature is greater than 1.2 times the auto-ignition temperature of the fuel in the combustion chamber 102. In other words, when the temperature in the combustion chamber 102 is greater than or equal to the set threshold, the temperature in the combustion chamber 102 can reach 1.2 times the auto-ignition temperature of the fuel during the compression stroke.

Under the condition, the control method can ensure that the fuel injected from the fuel injection system into the combustion chamber 102 rapidly combusts.

For example, if the auto-ignition temperature of the fuel is 300°C, the preset rule includes that the temperature characterized by the characterizing temperature in the combustion chamber 102 is greater than 360°C. In this way, it can be ensured that the fuel injected from the fuel injection system into the combustion chamber 102 can auto-ignite rapidly.

For example, if the auto-ignition temperature of the fuel is 400°C, the preset rule includes that the temperature characterized by the characterizing temperature in the combustion chamber 102 is greater than 480°C. In this way, it can be ensured that the fuel injected from the fuel injection system into the combustion chamber 102 can auto-ignite rapidly.

It will be appreciated that, the ratio of the temperature in the combustion chamber 102 characterized by the characterizing temperature to the auto-ignition temperature included in the preset rule is not limited to the foregoing embodiment, and may be selected by a person skilled in the art based on an actual requirement.

In an example, the input parameter of the preset rule further includes a crank angle of the engine.

One rotation of the crank of the engine covers 360 degrees. Based on the obtained crank angle, the fuel injection system can be effectively controlled to inject the fuel when the crank is rotated to a set crank angle. In this way, the control method can accurately control the timing of the fuel injection, so that the fuel can be heated for a sufficient time in the combustion chamber 102 and can auto-ignite more efficiently.

In an example, the preset rule includes that the crank angle of the engine ranges from 30° to 130° of a before top dead center of the compression stroke.

In a process in which the piston 104 moves from bottom dead center to top dead center, the crank rotates by 180°. In this example, the fuel injection is completed in a period of time starting from 50° of rotation of the crank from the bottom dead center to 150 ° of rotation of the crank. In other words, before the piston 104 reaches the top dead center, the fuel injection system already injects the fuel. In this way, the fuel is heated in the combustion chamber 102 for sufficient time, so that the fuel can combust when the piston 104 is near the top dead center.

It should be noted that the camshaft of the engine rotates synchronously with the crank. Therefore, to adjust the heating time of the combustion in the combustion chamber 102, the crank angle of the engine in this embodiment of the present disclosure may be equivalently replaced with phase information of the camshaft.

In an example, to enable the temperature in the combustion chamber 102 to reach the set threshold, the control method further includes that the combustion chamber 102 is heated. In this example, during the warm-up state, the temperature in the combustion chamber 102 can be heated to the set threshold.

In this example, the engine includes a heating apparatus. The heating apparatus may heat the combustion chamber 102 by means of electric heating or combustion heating. The heating apparatus heats the combustion chamber 102, so as to meet a temperature condition of the auto-ignition of the fuel. In other words, the engine is caused to complete the warm-up. After the heat, the temperature in the combustion chamber 102 allows the auto-ignition to occur when fuel is injected into the combustion chamber 102.

In an example, when the characterizing temperature is less than the set temperature, the combustion chamber 102 is heated. When the characterizing temperature is lower than the set temperature, the fuel injected into the combustion chamber 102 does not be auto-ignite. When the characterizing temperature reaches or exceeds the set temperature, the fuel injected into the combustion chamber 102 can auto-ignite.

For example, when the characterizing temperature is greater than or equal to the set temperature, the combustion chamber 102 is stopped heating. In other words, the warm-up of the engine is completed. The engine has a condition for switching from the warm-up state to the non-warm-up state. When the characterizing temperature is greater than or equal to the set temperature, the temperature in the combustion chamber is greater than or equal to the set threshold. The temperature in the combustion chamber 102 can reach the auto-ignition temperature of the fuel during the compression stroke.

In this example, when the characterizing temperature is greater than or equal to the set temperature, the combustion chamber 102 is stopped heating. Because the auto-ignition of the fuel generates heat, the heat may ensure that the characterizing temperature of the combustion chamber 102 is greater than or equal to the set temperature. In other words, the heat can cause the temperature in the combustion chamber 102 to always reach the auto-ignition temperature of the fuel during the compression stroke, so that the fuel auto-ignites.

Therefore, in this example, in the non-warm-up state, the characterizing temperature may no longer be obtained. In other words, during the second operating state, obtaining of the characterizing temperature is stopped, and the temperature in the combustion chamber 102 meets the preset rule by default. When the engine operates in the non-warm-up state, during the compression stroke, the fuel can be injected directly into the combustion chamber 102 because the temperature in the combustion chamber 102 can be always maintained by the heat of the auto-ignition of the fuel at a value that meets the preset rule. The fuel enters the combustion chamber 102 and is heated and auto-ignite. Therefore, the method for controlling an engine in this embodiment of the present disclosure can be simplified, to ensure efficient operation of the engine.

In will be appreciated, in this example, in the non-warm-up state, the characterizing temperature may still be obtained at a specific frequency. Therefore, in the non-warm-up state, the temperature in the combustion chamber 102 can be heated and raised in time when the temperature decreases, thereby ensuring the auto-ignition of the fuel. However, considering the heat generated when the fuel combusts, the frequency may be a relatively low value, to simplify the method for controlling an engine in this embodiment of the present disclosure to some extent.

In an example, that the combustion chamber 102 is heated includes the following step. The fuel is ignited through a spark plug 110, to heat the combustion chamber 102 by means of the heat of the fuel. In other words, in the warm-up state, to increase the temperature in the combustion chamber of the engine to the set threshold, the fuel may be ignited by the spark plug to heat the combustion chamber by means of the heat of the fuel.

In this example, the fuel is ignited through the spark plug 110. Heat is generated when the fuel combusts. The heat is used for heating the combustion chamber 102. In this method, the spark plug 110 of an original engine is used to heat the combustion chamber 102. When the temperature in the combustion chamber 102 is greater than or equal to the set threshold, the fuel injected from the fuel injection system can auto-ignite. When the acquired characterizing temperature reaches the set temperature, the spark plug 110 does not need to be started again. The temperature in the combustion chamber 102 is directly maintained by using the heat generated from combustion in the combustion chamber 102, so that the fuel injected into the combustion chamber 102 by the fuel injection system can auto-ignite.

In this example, the heating manner of using the heat of the fuel to heat the combustion chamber 102 by igniting the fuel through the spark plug 110 is only applicable to heating the engine in the warm-up state of the engine. In the non-warm-up state, if the combustion chamber 102 needs to be heated by using the spark plug to ignite the fuel, control of the engine becomes complex. Different power and torques are outputted by different operating cycles, which affects smoothness of operation of the engine.

In an example, that the combustion chamber 102 is heated includes the following step. The combustion chamber 102 is heated through an electric heating apparatus. To be specific, in the warm-up state or the non-warm-up state, to increase the temperature in the combustion chamber 102 of the engine to and above the set threshold, the combustion chamber 102 can be heated through the electric heating apparatus.

In this example, the engine body 100 is provided with the electric heating apparatus. The electric heating apparatus is configured to heat the combustion chamber 102. For example, the electric heating apparatus is arranged around the combustion chamber 102. The combustion chamber 102 is heated more rapidly through the electric heating apparatus. Performing heating through the electric heating apparatus can effectively control the temperature in the combustion chamber 102, which ensures that the fuel injected from the fuel injection system into the combustion chamber 102 can auto-ignite.

For example, the electric heating apparatus includes a power supply, a switch, and a heating resistor. The power supply is electrically connected to the switch and the heating resistor. The power supply is configured to supply power to the heating resistor. The switch is configured to control the on/off state of a heating current. The electric heating apparatus can rapidly heat the combustion chamber 102. In another example, the electric heating apparatus includes a power supply and a switch. A cylinder configured to define the combustion chamber 102 is electrically connected to the power supply. The power supply is configured to supply power to the cylinder and directly heat the cylinder. The switch is configured to control the on/off state of a heating current.

In an example, as shown in FIG. 2, the engine body 100 includes a cylinder liner 103. The cylinder liner 103 is arranged in the cylinder 101. An outer wall of the cylinder liner 103 is attached to an inner wall of the cylinder 101. The piston 104 is located in the cylinder liner 103. A material of the cylinder liner 103 is harder than a material of the inner wall of the cylinder 101, and has good wear resistance. The cylinder liner 103 can effectively improve a service life of the engine. In an example, the electric heating apparatus includes an electric heating unit. The electric heating unit is arranged between the inner wall of the cylinder 101 and the cylinder liner 103. The electric heating unit heats the combustion chamber 102, so that the temperature in the combustion chamber 102 is maintained at a temperature above the auto-ignition temperature of the fuel. Arranging the electric heating unit between the inner wall of the cylinder 101 and the cylinder liner 103 can avoid impact of an external force, thereby significantly improving durability of the engine.

The electric heating apparatus can operate and maintain the temperature of the combustion chamber to rise when the temperature in the combustion chamber drops unexpectedly in the non-warm-up stage of the engine. The electric heating apparatus can further heat the combustion chamber 102 in the warm-up stage of the engine, so that the characterizing temperature reaches the set temperature.

In an example, that a fuel injection system is controlled to inject fuel into the combustion chamber 102 includes the following step. The fuel is injected into the combustion chamber 102 multiple times.

Compared with injecting the fuel a single time, injecting the fuel into the combustion chamber 102 multiple times after the obtained characterizing temperature reaches the set temperature can cause the fuel to be mixed with the air more efficiently, so that the injected fuel can auto-ignite rapidly. In this way, a starting speed of the engine can be significantly increased.

In an example, before the fuel injection system is controlled to inject the fuel into the combustion chamber 102 based on the preset rule, the method includes the following step. When the engine is in an intake stroke or the compression stroke, the fuel injection system is controlled to inject a first set amount of fuel into the combustion chamber 102.

That the fuel injection system is controlled to inject fuel into the combustion chamber 102 based on the preset rule includes the following step. The fuel injection system is controlled to inject a second set amount of fuel into the combustion chamber 102. The second set amount is greater than the first set amount.

In a specific embodiment, when the engine is in the intake stroke, fuel pre-injection is performed, i.e., the first set amount of fuel is injected. When the engine is in the compression stroke, main fuel injection is performed, i.e., the second set amount of fuel is injected. An amount of the pre-injected fuel is less than an amount of the main injected fuel. Specifically, when the engine is in the intake stroke, the fuel injection system is controlled to inject the first set amount of fuel into the combustion chamber 102. In this case, the first set amount is the amount of the pre-injected fuel. The first set amount is relatively small. Therefore, an auto-ignition condition is far from being met after the first set amount of fuel is dispersed in the combustion chamber. In this case, the pre-injected fuel does not auto-ignite. However, the pre-injected fuel can sufficiently mix with the air, so that the main injected fuel can rapidly and sufficiently mixes with a gas mixture in the combustion chamber 102. When the engine is in the compression stroke, the fuel injection system is controlled to inject the second set amount of fuel into the combustion chamber 102. In this case, the second set amount is the amount of the main injected fuel. Because the characterizing temperature reaches the set temperature, the fuel auto-ignites in the combustion chamber 102 after the main injection.

In another specific embodiment, when the engine is in the compression stroke, fuel pre-injection is first performed and then main fuel injection is performed. An amount of the pre-injected fuel is less than an amount of the main injected fuel. Specifically, when the engine is in the compression stroke, the fuel injection system is controlled to inject the first set amount of fuel into the combustion chamber 102. In this case, the first set amount is the amount of the pre-injected fuel. The first set amount is relatively small. Therefore, the auto-ignition condition is far from being met after the first set amount of fuel is dispersed in the combustion chamber. However, the pre-injected fuel can sufficiently mix with the air, so that the main injected fuel can rapidly and sufficiently mixes with a gas mixture in the combustion chamber 102. Next, the fuel injection system is controlled to inject the second set amount of fuel into the combustion chamber 102. In this case, the second set amount is the amount of the main injected fuel. Because the characterizing temperature reaches the set temperature, the fuel auto-ignites in the combustion chamber 102 after the main injection.

In this example, the pre-injected fuel can rapidly mix with the air, and the main injected fuel can rapidly and sufficiently mix with the gas mixture in the combustion chamber 102, thereby achieving rapid combustion without a knock.

According to a fourth embodiment of the present disclosure, a vehicle is provided. The vehicle includes a vehicle body and the foregoing engine. The engine is arranged on the vehicle body.

The vehicle has the advantages of fuel saving and high thermal efficiency.

The foregoing embodiments focus on differences between the embodiments. As long as different optimization features between the embodiments are not contradictory, different optimization features may be combined to form better embodiments. In consideration of brief description, details are not described herein again.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited only by the appended claims.

**Claims**

1. An engine, comprising an engine body, a fuel injection system, and a piston, a cylinder being formed in the engine body, the piston being slidably arranged in the cylinder, a combustion chamber being formed between the piston and an inner wall of the cylinder, the fuel injection system being connected to the combustion chamber and configured to inject fuel into the combustion chamber;

   in an operating cycle of the engine, total energy generated from the combustion of the fuel in the combustion chamber being Q1, exhaust heat of the combustion chamber being Q2, and heat emitted outward from the combustion chamber being Q3,
   wherein

   $$35\% \leq Q2:Q1 \leq 45\%;\ and\ Q3:Q1 \leq 20\%.$$

2. The engine according to claim 1, further comprising an exhaust system and an exhaust utilization apparatus, the exhaust system being in communication with inside of the combustion chamber, and the exhaust utilization apparatus being connected to an exhaust pipe.

3. The engine according to claim 2, wherein the air exhaust utilization apparatus comprises a turbocharging module; the turbocharging module comprises a turbine, a rotating shaft, and a compressor wheel; the turbine and the compressor wheel are both drivingly connected to the rotating shaft; the turbine is located in the exhaust system; and the compressor wheel is located in an intake system.

4. The engine according to claim 3, wherein the exhaust utilization apparatus comprises a generator; and a rotor of the generator is drivingly connected to the turbine.

5. The engine according to any of claims 2 to 4, wherein the exhaust utilization apparatus comprises an exhaust gas recirculation module; and the exhaust gas recirculation module comprises a gas return branch pipe and an exhaust gas cooler; the exhaust gas cooler is arranged on the gas return branch pipe; one end of the gas return branch pipe is connected to the exhaust system; and another end of the gas return branch pipe is connected to the intake system of the engine.

6. The engine according to any of claims 2 to 5, wherein the exhaust utilization apparatus comprises a Rankine circulation module; the Rankine circulation module comprises a circulation pipeline, a heat exchanger, an expander, a condenser, and a pump body; the heat exchanger, the expander, the condenser, and the pump body are connected end to end through the circulation pipeline; the heat exchanger has a first heat exchange channel and a second heat exchange channel; the first heat exchange channel is in communication with the exhaust system; and the second heat exchange channel is in communication with the circulation pipeline.

7. The engine according to any of claims 2 to 6, wherein the exhaust utilization apparatus comprises at least one of a thermoelectric power generation module, a refrigeration and air conditioning module, and a waste heat heating module.

8. The engine according to any of claims 1 to 7, further comprising a heat preservation apparatus, the heat preservation apparatus being arranged in the engine body, and the heat preservation apparatus being configured to retain heat within the combustion chamber.

9. The engine according to claim 8, wherein the heat preservation apparatus comprises:
a heat preservation structure, a thermal insulation chamber being formed in the heat preservation structure, and the heat preservation structure being arranged on an outer side of the cylinder and around the cylinder.

10. The engine according to claim 8 or 9, wherein the heat preservation apparatus comprises:
a thermal insulation coating, the thermal insulation coating being arranged on the inner wall of the cylinder, or arranged on the outer side of the cylinder and around the cylinder, or arranged on an end of the piston.

11. The engine according to claim 10, wherein the thermal insulation coating is made of a silicon dioxide reinforced porous anodic alumina.

12. The engine according to any of claims 1 to 7, wherein the engine body comprises a cylinder liner; the cylinder liner is arranged in the cylinder; an outer wall of the cylinder liner is attached to the inner wall of the cylinder; and the piston is located in the cylinder liner.

13. The engine according to claim 12, further comprising a heat preservation apparatus, the heat preservation apparatus being arranged on the engine body, the heat preservation apparatus being configured to retain heat within the combustion chamber, and the heat preservation apparatus comprising a thermal insulation coating;
the thermal insulation coating being arranged between the inner wall of the cylinder and the cylinder liner, or the thermal insulation coating being arranged on an inner wall of the cylinder liner.

14. The engine according to claim 12 or 13, further comprising a heating apparatus, the heating apparatus comprising an electric heating unit, the electric heating unit being arranged between the inner wall of the cylinder and the outer wall of the cylinder liner.

15. The engine according to any of claims 1 to 14, wherein the fuel injection system is configured to inject the fuel into the combustion chamber after a temperature in the combustion chamber reaches a set threshold, to cause the fuel to be heated and auto-ignite in the combustion chamber; and the temperature in the combustion chamber reaches an auto-ignition temperature of the fuel during a compression stroke when the temperature in the combustion chamber is greater than or equal to the set threshold.

16. The engine according to claim 15, further comprising:
a heating apparatus, configured to heat the combustion chamber, to cause the temperature in the combustion chamber to reach the set threshold.

17. The engine according to claim 16, wherein the heating apparatus comprises:

a spark plug, configured to ignite the fuel to heat the combustion chamber through heat of the fuel; and/or
an electric heating unit, configured to electrically heat the combustion chamber.

18. The engine according to any of claims 1 to 17, wherein an excess air coefficient of the engine is greater than or equal to 1.

19. A method for controlling the engine according to any of claims 1 to 18, comprising:

obtaining a temperature value characterizing a temperature in the combustion chamber; and controlling, based on a preset rule, the fuel injection system to inject fuel into the combustion chamber when the engine is in a compression stroke, the fuel in the combustion chamber being heated and auto-igniting, and an input parameter of the preset rule comprising the temperature value.

20. The method for controlling the engine according to any of claims 1 to 18, wherein the engine has a first operating state and a second operating state; and the control method comprises:

increasing the temperature in the combustion chamber of the engine to a set threshold during the first operating state, the temperature in the combustion chamber reaching an auto-ignition temperature of the fuel during the compression stroke when the temperature in the combustion chamber is greater than or equal to the set threshold; and
injecting the fuel into the combustion chamber during the second operating state, to cause the fuel to be heated and auto-ignite in the combustion chamber.

21. A vehicle, comprising a vehicle body and the engine according to any of claims 1 to 18, the engine being arranged on the vehicle body.

FIG. 1

FIG. 2

## INTERNATIONAL SEARCH REPORT

| International application No. |
| --- |
| **PCT/CN2023/104862** |

| A. | CLASSIFICATION OF SUBJECT MATTER |
| --- | --- |

F01N5/02(2006.01)i; F02N19/02(2010.01)i

According to International Patent Classification (IPC) or to both national classification and IPC

| B. | FIELDS SEARCHED |
| --- | --- |

Minimum documentation searched (classification system followed by classification symbols)

IPC: F01N, F02N

Documentation searched other than minimum documentation to the extent that such documents are included in the fields searched

Electronic data base consulted during the international search (name of data base and, where practicable, search terms used)

CNTXT, ENTXT, DWPI, CNKI: 车, 发动机, 内燃机, 排气, 废气, 尾气, 热量, 散热, 加热, 温度, 自燃, vehicle, engine, exhaust, heat, temperature, self-ignite

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 101932817 A (MACK TRUCKS, INC.) 29 December 2010 (2010-12-29) description, paragraphs 2-25, and figures 1a-3 | 1-21 |
| Y | CN 111108270 A (ACHATES POWER, INC.) 05 May 2020 (2020-05-05) description, specific embodiments, and figures 1-8 | 1-21 |
| PY | CN 218991739 U (BYD CO., LTD. et al.) 09 May 2023 (2023-05-09) description, specific embodiments, and figures 1-7 | 1-21 |
| PY | CN 218991741 U (BYD CO., LTD.) 09 May 2023 (2023-05-09) description, specific embodiments, and figures 1-3 | 1-21 |
| A | CN 102562298 A (CHEN MINGHUI) 11 July 2012 (2012-07-11) entire document | 1-21 |
| A | US 2020173334 A1 (ACHATES POWER, INC.) 04 June 2020 (2020-06-04) entire document | 1-21 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 September 2023** | **27 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104862**

| Patent document cited in search report | | | Publication date (day/month/year) | Patent family member(s) | | | Publication date (day/month/year) |
|---|---|---|---|---|---|---|---|
| CN | 101932817 | A | 29 December 2010 | WO | 2009096947 | A1 | 06 August 2009 |
| | | | | JP | 2011511203 | A | 07 April 2011 |
| | | | | US | 2010294224 | A1 | 25 November 2010 |
| | | | | EP | 2247841 | A1 | 10 November 2010 |
| CN | 111108270 | A | 05 May 2020 | EP | 3645845 | A1 | 06 May 2020 |
| | | | | WO | 2019036235 | A1 | 21 February 2019 |
| | | | | US | 2020182114 | A1 | 11 June 2020 |
| | | | | JP | 2020531729 | A | 05 November 2020 |
| | | | | IN | 202017004973 | A | 06 March 2020 |
| CN | 218991739 | U | 09 May 2023 | None | | | |
| CN | 218991741 | U | 09 May 2023 | None | | | |
| CN | 102562298 | A | 11 July 2012 | None | | | |
| US | 2020173334 | A1 | 04 June 2020 | JP | 2020531733 | A | 05 November 2020 |
| | | | | EP | 3645844 | A1 | 06 May 2020 |
| | | | | WO | 2019036212 | A1 | 21 February 2019 |

Form PCT/ISA/210 (patent family annex) (July 2022)

22

**EP 4 644 673 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211731086